# EUROPEAN PATENT APPLICATION

(11) **EP 0 880 134 A2**
(43) Date of publication of application: **25.11.1998**
(21) Application number: 98304067.6
(22) Date of filing: 21.05.1998
(51) Int. Cl.: G11B 20/00, H04N 9/82

(54) **Information adding/extracting method, information adding/extracting system, information signal processor and information signal recording medium**

(30) Priority: 22.05.1997 JP 132141/97
(71) Applicant: SONY CORPORATION, Tokyo (JP)
(72) Inventor: Ogino, Akira, Shinagawa-ku, Tokyo (JP)
(74) Representative: Nicholls, Michael John

(57) **Abstract**

A summing section adds, by summing process, additional information corresponding to the least significant bit of the digital video signal S1 to the digital video signal S1 and records the video signal S2 to which the additional information is added to a recording medium with a writing section. When the video signal, being recorded on a recording medium, to which the additional information is added is duplicated to the other recording medium, the additional information is extracted for utilization by subtracting the original video signal to which the additional information is not added from the duplicated video signal to which the additional information is added.

## Description

The present invention relates to a method, an apparatus and a recording medium wherein additional information is added to an information signal such as a video signal minimising the deterioration to it. The present invention also relates to extraction for utilization of the additional information added to the information signal when necessary.

Information such as a digital video signal provided, for example, via the Internet and recording media such as CD-ROM can be duplicated rather simply. Therefore, illegal duplication of such information has been considered as a serious problem.

Therefore, there has been developed a technology to prevent illegal duplication by previously adding information (eg. copyright information) such as a picture, code and character for identifying a copyright holder, for example, to the information signal such as a video signal with a method not detected by users and then extracting, as required, the copyright information added to the video signal.

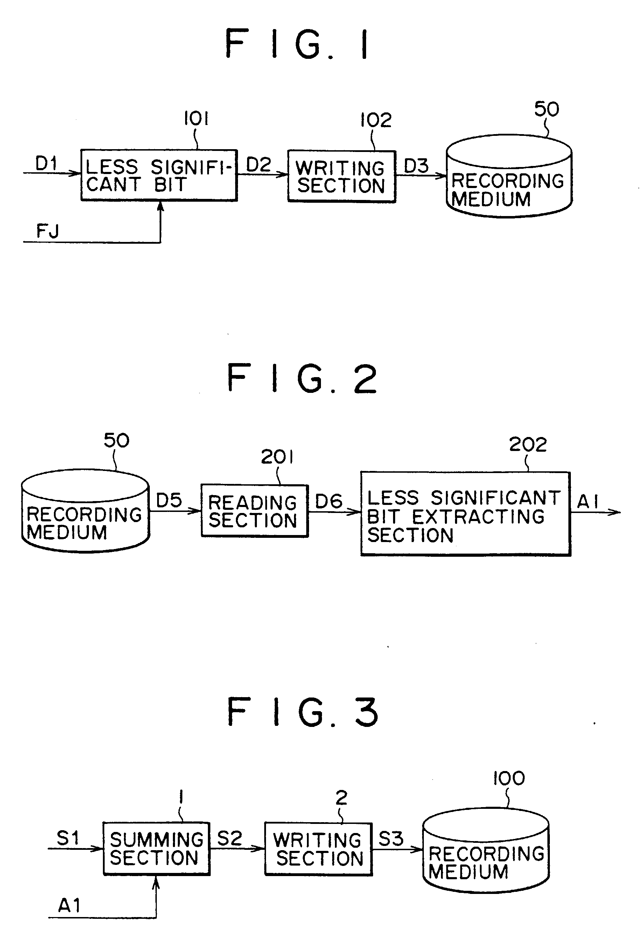

Fig. 1 shows a basic structure of a recording apparatus for recording the signal to a recording medium by adding, for example, additional information such as the copyright information to the digital video signal. Fig. 2 shows a basic structure of an additional information extracting apparatus for extracting the additional information from the information signal recorded on the recording medium to which the additional information is added by the recording apparatus shown in Fig. 1.

As shown in Fig. 1, for example, the digital video signal D1 expressing the video signal of one pixel with the 8-bit data and 1-bit additional information FJ are supplied to less significant bit converter section 101.

The less significant converter section 101 generates a digital video signal D2 by replacing the less significant bit of the 8-bit data forming the digital video signal D1 with additional information FJ. In this case, in the less significant bit converter section 101, all less significant bits of the digital video signal D1 are replaced with the additional information AI and the least significant bit of the digital video signal D1 forming the image of the predetermined area of the displayed image is replaced with the additional information AI.

The digital video signal D2 to which the additional information is added by the less significant bit converter section 101 is supplied to a writing section 102. The writing section 102 converts the digital video signal D2 into the digital video signal D3 for recording and then records this signal on a recording medium 50.

As explained above, visual influence of the additional information AI on the image formed by the digital video signal D1 can be lowered by replacing only the least significant bit of the digital video signal D1 with the additional information AI.

For extraction of the additional information being added to the digital video signal recorded on a recording medium 50, the additional information extracting apparatus shown in Fig. 2 is used.

In the additional information extracting apparatus shown in Fig. 2, the reading section 201 forms the reproduced digital video signal D6 in which one pixel is expressed by 8 bits from the signal D5 obtained by playing the recording medium 50 and then supplies this signal D6 to the less bit extracting section 202.

The less significant bit extracting section 202 selects the least significant bit from the 8-bit data forming the reproduced digital video signal D6 to extract the additional information AI added to the reproduced digital video signal D6.

This additional information is, as explained above, copyright information and the copyright holder of the relevant video signal can be detected, for example, by extracting the additional information being added to the digital video signal.

As explained above, since it can easily proved by adding the additional information to the information signal such as the digital video signal that the relevant information signal itself has the copyright, illegal copying of the information signal can be prevented effectively.

As explained with reference to Fig. 1 and Fig. 2, when the additional information is added to the information signal by replacing the least significant bit of the digital video signal as the information signal with the additional information, the additional information does not disturb the video signal to a large extent but resolution is lowered because the most significant bit of the original digital video signal is lost.

Moreover, as explained previously, since the most significant bit of the digital video signal is replaced with the additional information, the additional information may easily be lost by erasing the most significant bit of the digital video signal to which the additional information is added.

According to a first aspect of the present invention, as information adding/extracting method is characterized in adding additional information corresponding to the least significant bit of the digital information signal to an original digital information signal to generate the digital information signal to be supplied to users and subtracts the original digital information signal from the digital information signal to be supplied to users in order to extract the additional information.

According to a second aspect of the present invention, there is provided an information adding/extracting system characterised by comprising:
information producing means for producing the digital information signal to be supplied to users by adding through the summing process the additional information corresponding to the least significant bit of an original digital information signal to said original digital information signal; and information extracting means for extracting said additional information by subtracting said original digital information from said digital information signal to be supplied to users.

Since the additional information is added to the information signal through the summing process, the additional information can be added to the information signal without deterioration of the information signal, unlike the case where the most significant bit of the information signal is replaced or converted with the additional information. Moreover, since the additional information is added to the information signal through the summing process, the additional signal added to the information signal cannot be erased easily. In addition, the additional information may be extracted and used easily as the difference element as explained previously.

According to a third aspect of the present invention, there is provided an information adding/extracting method for adding additional information to a video signal and extracting the added additional information and is characterized in adding the additional information by summing such additional information corresponding to the least significant bit of the digital information signal to the sections in every other N (N is the integer 1 or larger) sections of the correlated video signal sections of the digital information signal in order to generate the digital video signal to be supplied to users and extracting the additional information from the video signal in the section where the additional information is added by subtracting the video signal in the sections where the additional information adjacent to the video signal is not added.

According to a fourth aspect of the present invention there is provided an information adding/extracting system to add an additional information to a digital video signal and to extract said added additional information, comprising: information producing means for producing said digital video signal to be supplied to users by adding the additional information corresponding to the least significant bit of said digital video signal to the sections every other N sections of the section having correlation of the digital video signal, where N is integer 1 or larger; and information extracting means for extracting said additional information from said digital video signal to be supplied to users by subtracting from the information of the section where said additional information is added the information of the adjacent sections.

Where the additional information is added, on the occasion of adding the additional information to the video signal, to one of the adjacent video signal sections which are correlated with each other in every other pixel or in every other horizontal line section of the horizontal direction and such additional information is not added to the other signal section. As explained, in the case of extracting the additional information added to the video signal, the additional information can be extracted by subtracting the video signal in the video signal section where the adjacent additional information is not added from the video signal in the video signal section where the additional information is added.

Namely, since the video signal is greatly correlated between, for example, pixels, horizontal lines, fields and frames in the horizontal direction, when subtraction is executed between such intensively correlated video signal sections, the video signal element is cancelled and thereby the additional information added to the video signal can be extracted. Moreover, in this case, the additional information added to the video signal can be extracted without using the original video signal which is same as the video signal before addition of the additional information.

Accordingly, embodiments of the present invention can provide a method, an apparatus or a recording medium which adds the additional information to the information signal without deterioration of the information signal to extract for utilization the additional information added to the information signal as required.

Preferred embodiments of the information adding/extracting method, information signal processor and information signal recording medium according to the present invention will be explained by way of non-limitative example with reference to the accompanying drawings in which:
Fig. 1 is a block diagram for explaining an example of the apparatus of related art for adding an additional information to an information signal;
Fig. 2 is a block diagram for explaining an example of an apparatus for extracting additional information from the information signal to which additional information is added by the apparatus shown in Fig. 1;
Fig. 3 is a block diagram for explaining a recording apparatus as an embodiment of the present invention;
Fig. 4 is a block diagram for explaining an additional information extracting apparatus as an embodiment of the present invention;
Fig. 5 is a block diagram for explaining an additional information extracting apparatus as the other embodiment of the present invention;
Fig. 6 is a block diagram for explaining a recording apparatus as the other embodiment of the present invention; and
Fig. 7 is a block diagram for explaining an additional information extracting apparatus as the other embodiment of the present invention.

Referring to figures, there is shown an embodiment of information adding/extracting method, information signal processor, and information signal recording medium of the present invention.

Fig. 3 is a block diagram for explaining a recording apparatus of the present invention. The recording apparatus is used by a manufacturer (maker) of a recording medium having recorded a video signal. In this case, the copyright information is added to the video signal S1 as the additional information A1 and thereafter recorded to a recording medium 100.

As shown in Fig. 3, the recording apparatus is provided with a summing section 1 and a writing section 2. Moreover, the recording medium 100 is formed, for example, as a DVD (Digital Video Disc).

As shown in Fig. 3, a video signal S1 to be recorded on the recording medium 100 and additional information A1 to be added to the video signal S1 are supplied to the summing section 1 of the recording apparatus.

The video signal S1 is a digital signal in which the image of one pixel is expressed, for example, by 8 bits. Moreover, the additional information A1 is the information, as explained above, to display the copyright information such as a copyright holder and the digital signal of 1 bit.

The summing section 1 adds the additional information A1 to the video signal S1 by summing the additional information A1 to the video signal S1 supplied thereto. The additional information of 1 bit is summed to the least significant bit of the video signal expressed by 8 bits. Namely, the very low level additional information of 1 bit is summed to the high level video signal S1 expressed by 8 bits.

When the additional information is added to the video signal S1 by the summing process as explained above, the information of the least significant bit of the video signal S1 is never lost, unlike the case where the additional signal is added to the video signal by replacing the least significant bit of the video signal with the additional information. Moreover, since the carrying may also be generated in some cases by the summing process, the additional information cannot be erased only by easing the least significant bit.

Namely, the additional information A1 can be added to the video signal S1 without deterioration of the video signal S1 and the additional information A1 added to the video signal S1 can no longer be erased easily.

In addition, since the additional information A1 is a very low level signal as explained above, it does not give a large influence, for example, disturbance of image reproduced by the video signal to which the additional information A1 is added, on the video signal to which the additional information A1 is added.

In the summing section 1, the video signal S2 formed by adding the additional information A1 to the video signal S1 is then supplied to the writing section 2. The writing section 2 converts the supplied video signal S2 to the video signal S3 for recording suitable for recording and then records this video signal S3 to a recording medium 100. Thereby, the video signal having added the additional information A1 is recorded to the recording medium 100.

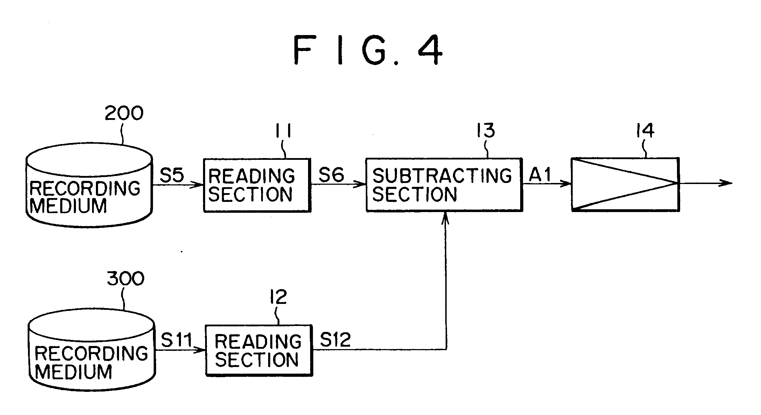

Fig. 4 is a block diagram for explaining an additional information extracting apparatus of the present invention. As explained previously, the additional information extracting apparatus extracts the additional information added to the video signal by the summing process in the side of maker for manufacturing a recording medium having recorded the video signal to which the additional information is added. The additional information extracting apparatus shown in Fig. 4 is used in the side of maker for manufacturing the recording medium in order to prevent illegal duplication by disclosing the users who are conducting illegal duplication.

Namely, the additional information extracting apparatus extracts, when the video signal recorded to the recording medium 100 after addition of the additional information through the summing process is illegally duplicated, the copyright information as the added additional information from the illegally duplicated video signal and retrieving the copyright holder, thereby to disclose the users who are conducting illegal duplication and prevents illegal duplication.

As shown in Fig. 4, the additional information extracting apparatus of this embodiment is provided with reading sections 11, 12, a subtracting section 13 and an amplifying circuit 14. Moreover, the recording media 200, 300 are DVD as in the case of the recording medium 100.

The recording medium 200 has recorded (duplicated) illegally the video signal in which the additional information A1 recorded in the recording medium 100 explained previously is added by the summing process. The recording medium 300 has recorded the so-called original video signal in which the additional information A1 is not added. Namely, the original video signal recorded in the recording medium 300 is the same video signal as that recorded on the recording medium 200, except for addition of the additional information A1.

The reading section 11 forms a reproduced video signal S6 from the signal S5 obtained by playing the recording medium 200 and then supplies this signal S6 to the subtracting section 13. Simultaneously, the reading section 12 forms an original reproduced video signal S12 from the signal S11 obtained by playing the recording medium 300 and then supplies this signal S12 to the subtracting section 13.

The subtracting section 13 extracts the additional information A1 added to the reproduced video signal S6 through the summing process by subtracting the original reproduced video signal S12 from the reproduced video signal S6. The subtracting process in the subtracting section 13 is executed after the reproduced video signal S6 is synchronized with the original reproduced video signal S12 by obtaining a difference element between the video signals of the same positions of both video signals.

As explained, the additional information A1 can be extracted as a difference element by subtracting the original video signal which is the video signal before addition of the additional information from the video signal to which the additional information A1 is added.

The additional information A1 extracted by the subtracting section 13 is supplied to the amplifying circuit 14 for amplification of the level and is then supplied, for example, to a monitor display to display the copyright information such as the copyright holder on the display screen of the monitor display.

Thereby, as explained previously, the copyright information which is additional information added can be extracted from the illegally duplicated video signal to declare the copyright holder in order to effectively disclose the users who are conducting illegal duplication. Moreover, declaration of such copyright information of the video signal will effective for prevention of illegal duplication.

Here, the additional information is not always required to be added to all pixels. It is also possible to intermittently add the additional information to the video signal in such a manner that the additional information is added to the pixels in every other predetermined number of pixels, for example, in every other pixel or other two pixels, or to the horizontal line in every other predetermined number of horizontal lines, for example, in every horizontal line or other two horizontal lines, or to the field in every other predetermined number of fields.

When the additional information is added intermittently as explained above, influence of the additional information added to the video signal on the video signal can further be reduced.

Moreover, it is also possible to add the additional information to the video signal in the predetermined rectangular area section on the display area. For example, it is possible that the additional information is added to the video signal of the predetermined area of the right lower part of the display area. Naturally, it is also possible that the additional information can be added to the desired area on the display area, such as to the center, left upper, left lower areas, for example, of the display area not limiting only to the right lower area of the display area. In addition, it is also possible to set a plurality of different areas on the display area to add different pieces of additional information respectively to a plurality of display areas.

When the additional information is added intermittently to the video signal or to the video signal to form an image in the predetermined area of the display area, the adding section can be controlled by controlling the timing to supply the additional information A1 to the summing section 2 shown in Fig. 3 or by controlling the timing of summing process of the additional information A1 in the summing section 1.

In the embodiment explained above, the additional information extracting apparatus shown in Fig. 4 extracts the additional information added to the video signal and outputs only this additional information. In this case, since only the additional information can be seen, it is impossible to know to what video signal the relevant additional information is added.

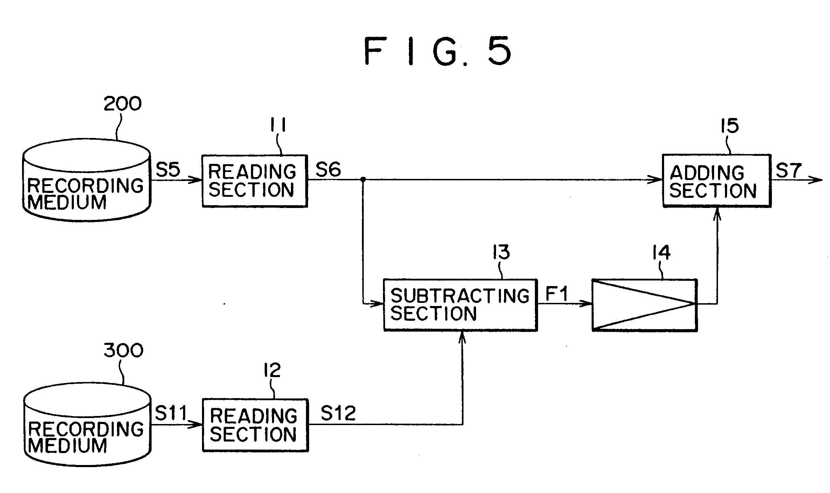

Therefore, as shown in Fig. 5, the additional information extracting apparatus of this example is provided with an adding section 15 for adding the level-amplified additional information A1 to the reproduced video signal S6 to simultaneously observe the image formed by the reproduced video signal S6 and the additional information. Namely, an image by the additional information added to the relevant video signal is displayed as is floating on the image displayed by the video signal to which the very low level additional information is added in order to observe both images simultaneously.

The additional information extracting apparatus of this example shown in Fig. 5 is provided with the adding section 15 as explained above. Each section other than this adding section 15 is similar to each corresponding section of the additional information A1 extracting apparatus explained with reference to Fig. 4.

Moreover, the recording media 200 and 300 are also similar to the recording media 200, 300 used in the additional information extracting apparatus shown in Fig. 4 . Therefore, on the recording medium 200, the video signal having added the very low level additional information A1 is recorded and on the recording medium 300, the original video signal having added no additional information A1 is recorded.

In the additional information extracting apparatus of this embodiment, the reproduced video signal S6 formed by the reading section 11 is supplied to the subtracting section 13 and adding section 15.

Like the additional information extracting apparatus explained with reference to Fig. 4, the reproduced video signal S12 formed in the reading section 12 is supplied to the subtracting section 13, the reproduced video signal S12 is subtracted from the reproduced video signal S6 in the subtracting section 13 and the additional information A1 is extracted as the difference element. This additional information A1 is amplified by the amplifying circuit 14 up to the level for display as the visible information and is then supplied to the adding section 15.

The adding section 15 forms the reproduced video signal S7 by adding the additional information A1 of which level is amplified from the amplifying circuit 14 to the reproduced video signal S6 supplied thereto and then outputs such reproduced video signal S7.

The reproduced video signal S7 to which the level-amplified additional information is added is supplied, for example, to a monitor display. Thereby, the image, where an image depending on the level-amplified additional information is added to the image depending on the video signal to which very low level additional information is added, is displayed on the display area of the relevant monitor display.

Thereby, since it is now possible to observe the information offered by the image displayed by the video signal to which the additional information is added and the information offered by the additional information, the video signal recorded on the recording medium and the copyright holder of the relevant video signal can easily be checked simultaneously.

The additional information extracting apparatus explained with reference to Fig. 4 and Fig. 5 extracts the additional information as the difference element of both signals by preparing for the original video signal to which the additional information is not added and subtracting the original video signal from the video signal to which the additional information is added.

However, in this case, if there is no original video signal, the additional information cannot be extracted as explained above. Therefore, if the original video signal cannot be prepared previously, the additional information cannot always be extracted immediately.

The embodiment explained below always assures immediate extraction of the additional information by utilizing the correlation of the video signals without use of the original video signal.

The video signal has a higher correlation between adjacent pixels, horizontal lines, fields or between frames. In some cases, the same video signal is used in the adjacent pixels, horizontal lines, fields or frames.

Therefore, in this embodiment, the additional information is added by summing process to the video signal in every other horizontal line. Thereby, the additional information is added to the video signal of one line of two lines having intensive correlation and the additional information is not added to the video signal of the other line.

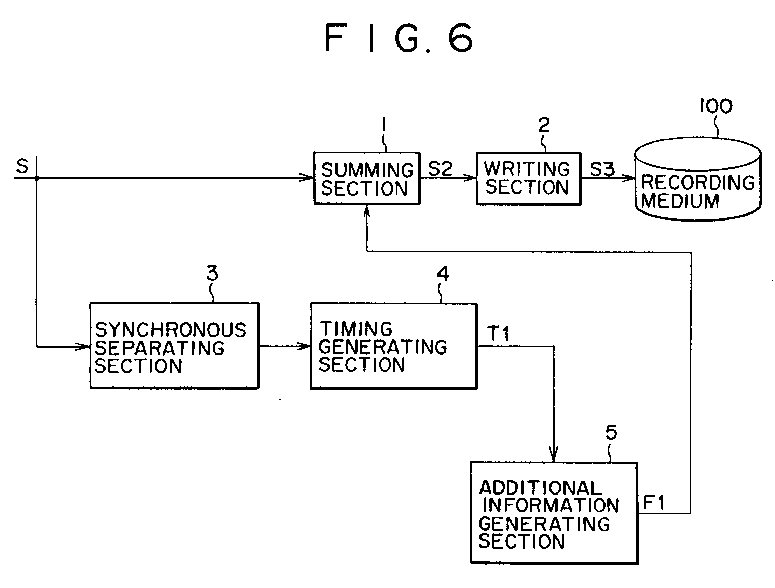

Fig. 6 is a block diagram for explaining the recording apparatus of this embodiment. The recording apparatus of this embodiment is used, like the recording apparatus explained previously with reference to Fig. 3, by a manufacturer (maker) producing a recording medium having recorded the video signal. In this case, after the copyright information is added to the video signal S1 as the additional information A1, it is then recorded on the recording medium 100.

As shown in Fig. 6, the recording apparatus comprises an summing section 1, a writing section 2, a synchronous separating section 3, a timing generating section 4 and an additional information generating section 5. The summing section 1, writing section 2 and recording medium 10 are similar to the corresponding sections and recording medium of the recording apparatus explained with reference to Fig. 3.

The video signal S1 to be recorded to the recording medium 100 is supplied to the summing section 1 and synchronous separating section 3. The synchronous separating section 3 separates the horizontal synchronous signal and vertical synchronous signal from the video signal S1 and then supplies these signals to the timing generating section 4.

The timing generating section 4 generates, with reference to the vertical synchronous signal, the timing signal T1 indicating the a pair of sections of the horizontal line to which the additional information is added and the horizontal line to which no additional information is added, for example, a pair or the first line and second line, third line and fourth line, fifth line and sixth line, ..... Namely, this timing signal T1 indicates, with reference to the vertical synchronous signal, the horizontal line to which the additional information is added in every other horizontal line. The timing signal T1 is supplied to the additional information generating section 5.

The additional information generating section 5 receives supply of the timing signal T1 to generate the additional information A1 to be added to the video signal S1 in the timing depending on the timing signal T1. In this embodiment, the additional information A1 to be added to the video signal is generated in every one horizontal line with reference to the vertical synchronous signal and is then supplied to the summing section 1.

The summing section 1 sums the additional information A1 to the video signal S1 supplied to add the additional information A1 to the video signal S1 to generate the video signal S2 to which the additional information S1 is added. Namely, in this embodiment, the additional information A1 is added in every other horizontal line of the video signal S1 to form the video signal S2.

The video signal S2 formed in the summing section 1 is supplied to the writing section 2. The writing section converts, as explained previously, the video signal S2 into the video signal S3 for recording suitable to the recording and this video signal S3 is then recorded in the recording medium 100.

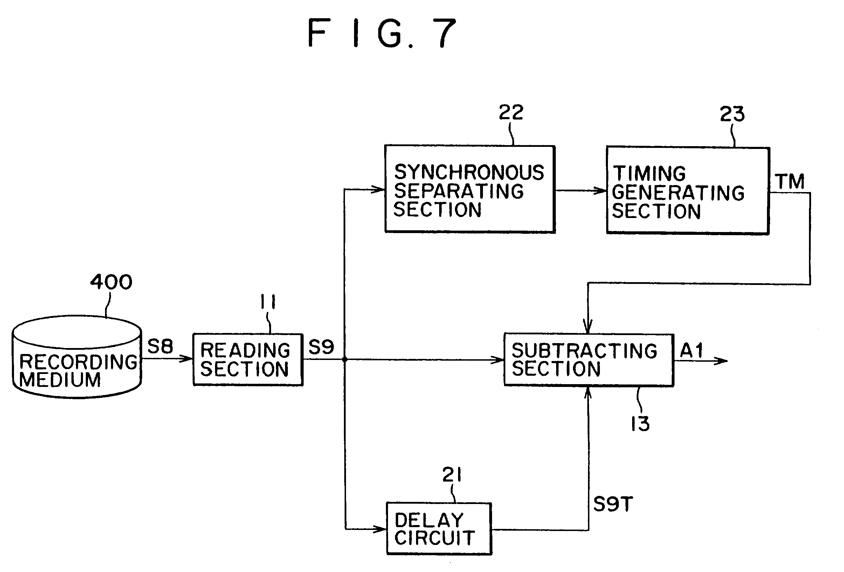

Fig. 7 is a block diagram for explaining the additional information extracting apparatus of this embodiment. The additional information extracting apparatus of this embodiment comprises, as shown in Fig. 7, a reading section 11, a subtracting section 13, a delay circuit 21 of one horizontal line, a synchronous separating section 22 and a timing generating section 23. The reading section 11 is similar to the corresponding each section of the additional information extracting apparatus explained with reference to Fig. 4 and Fig. 5.

The recording medium 400 stores, like the recording medium 200 used in the additional information extracting apparatus shown in Fig. 3 and Fig. 5, the video signal to which the additional information is added. However, in this embodiment, the recording medium 400 stores, as explained previously, the video signal to which the additional information A1 is added in every other line.

The reading section 11 forms the reproduced video signal S9 from the signal S8 obtained by reproducing the video signal recorded on the recording medium 400 and supplies this reproduced video signal S9 to the subtracting section 13, delay circuit 21 and synchronous separating section 22.

In this embodiment, the delay circuit 21 delays the supplied reproduced video signal S9 for one horizontal line and then supplies this delayed reproduced video signal S9T to the subtracting section 13. Namely, the reproduced video signal S9 from the reading section 11 and the reproduced video signal S9T delayed for one horizontal line from the delay circuit 21 are supplied to the subtracting section 13.

Therefore, the video signal of the adjacent one line to which the additional information is added and the video signal of one line to which the additional information is not added are sequentially supplied to the subtracting section 13.

Moreover, in the synchronous separating section 22, the horizontal synchronous signal and vertical synchronous signal are separated from the reproduced video signal S9 and are then supplied to the timing generating section 23. The timing generating section 23 generates, like the timing generating section 4 of the recording apparatus shown in Fig. 6, the timing signal TM indicating a pair of the horizontal line to which the additional information is added and the horizontal line to which the additional information is not added with reference to the vertical synchronous signal, for example, a pair of the first line and second line, third line and fourth line, fifth line and sixth line, ... and then supplies this timing signal TM to the subtracting section 13.

The subtracting section 13 performs, in the timing depending on the timing signal TM, the subtraction of the reproduced video signal S9 from the reading section 11 and subtraction of the video signal S9T from the delay circuit 21 between a pair of the horizontal lines.

As explained previously, since the video signal has a higher correlation between the adjacent horizontal lines, the video signal element is canceled by the subtraction process of the subtracting section 13 and thereby the additional information A1 is extracted as the difference element.

This process is sequentially repeated to extract the additional information A1 being added in every other line to the video signal. The extracted additional information A1 is once amplified and is then supplied to the monitor display for display of the image depending on the additional information A1 on the display area.

As explained above, the additional information being added to the video signal can be extracted and can also be utilized even without using the original video signal to which the additional information is not added.

Here, in this embodiment, the additional information is added to the video signal in every other line, but it is also possible that the additional information may be added to the video signal of the 1 to N pixels in every other N (N is integer 1 or larger) lines, for example, the additional information is added to the video signal of 1 to 2 lines in every other two lines or to the video signal of 1 to 3 lines in every other three lines. In this case, it is enough that the video signal of 1 to N lines to which the additional information is not added is subtracted from the video signal of the adjacent 1 to N lines to which the additional information is added.

Moreover, as explained above, the video signal has a higher correlation between adjacent pixels, fields or between frames. Therefore, the additional information added to the video signal can be extracted and can also be used for display by adding the additional information to one pixel section in every other pixel, one field section (one vertical section) in every other field and one frame section (two vertical sections) in every other frame and subtracting the video signal of the section where the adjacent additional information is not added from the video signal in the section where the additional information is added.

Naturally, within the range of intensive correlation, the additional information added to the video signal can also be extracted by adding the additional information in every other N (N is integer 1 or larger) pixels, or in every other N fields or in every other N frames and then subtracting the video signal of the section where the adjacent additional information is not added from the video signal of the section where the additional information is added.

Moreover, in above embodiment, the additional information is added only to the 1 to N sections in every other 1 to N sections of the sections correlated with each other in the recording medium 400, but in the embodiment explained below, the same additional information is added to the two sections correlated with each other but the additional information is added in two sections in such a manner as inverting the polarities of the additional information with each other.

For example, the same additional information is respectively added to the two line sections, first line and second line, third line and fourth line, ... of the pair lines of the video signal, but polarity of the additional information is respectively changed between two lines of the pair line. Namely, when the additional information to be added to the video signal of two lines of pair line is expressed, for example, by a, b, c, ..., the additional information is added to provide the result of a, -a, b, -b, c, -c, ...

When the polarity of the additional information is inverted between the two lines of pair line, the additional information can be extracted by subtracting the video signal to which the adjacent additional information of the minus polarity is added from the video signal to which the additional information of positive polarity is added. For example, the video signal of one line to which the additional information of the positive polarity is delayed for one line and the subsequent video signal of one line to which the additional information of the minus polarity is added is subtracted from the delayed video signal to which the additional information of positive polarity is added.

In this case, the video signal element is canceled, but the additional information of minus polarity is subtracted from the additional information of the positive polarity. As a result, the additional information can be obtained as the summing of the same additional information.

Moreover, like the embodiment explained previously, the pixel section, field section and frame section can also be considered as the unit of the section having correlation in place of the horizontal line.

The levels of the additional information added to the correlated two sections having the polarities inverted with each other can be canceled, when the polarities are inverted with each other and the levels are equal, by adding the video signals with additional information of the correlated two sections in order to obtain the video signal having removed the additional information.

However, the additional information is not removed even when tow signals of correlated two sections are summed by changing the levels of the additional information having the polarities inverted with each other. Moreover, the additional information is added to the video signal with the level thereof changed at random, making it more difficult to remove the additional information.

As explained above, the additional information can be extracted as required and can be utilized effectively by adding the additional information such as the copyright information by the summing process to the video signal, and then subtracting the original video signal to which the additional information is not added from the video signal to which the additional information is added or by subtracting the video signal to which the additional information is added and the video signal having a higher correlation.

Therefore, if the video signal is duplicated without permission of the copyright holder, the video signal duplicated and copyright holder thereof can be indicated clearly so that users who are illegally duplicating the video signal can be disclosed effectively and such illegal duplication can be prevented effectively.

In above embodiments, the recording apparatus shown in Fig. 3 and Fig. 6 has been explained as that being used by a maker manufacturing the recording medium 100 having recorded the video signal adding the additional information, but it is not limited thereto. For example, it is also possible to provide the function to the recording apparatus to be used by end users by summing the additional information as in the case of the recording apparatus shown in Fig. 3 and Fig. 6.

In this case, the information which is intrinsic to the relevant recording apparatus or the information which can identify the relevant recording apparatus such as the serial number intrinsic to the recording apparatus to be used by the relevant end user and manufacturer's name and model No. of the relevant recording apparatus can be added to the video signal as the additional information and is then recorded together to the recording medium.

Thereby, the additional information being added can be extracted from the video signal recorded on the recording medium using the additional information extracting apparatus shown in Fig. 4, Fig. 5 and Fig. 7 and therecording apparatus having conducted illegal duplication can be identified and searched depending on the extracted additional information.

Moreover, in this embodiment explained previously, the additional information extracting apparatus shown in Fig. 4, Fig. 5 and Fig. 7 has been explained as that used by a maker for manufacturing recording medium in which the video signal having added the additional information is recorded, but it is also possible that the reproducing apparatus used by end users is provided with a function, like the additional information extracting apparatus shown in Fig. 5 or Fig. 7, to extract and use the additional information added through summing process to the video signal.

For example, when the additional information extracting apparatus shown in Fig. 4 is applied to the reproducing apparatus used by end users, the reproduced video signal S6 formed by the reading section 11 can be output and the reproduced video signal S6 and the additional information from the amplifying circuit 14 are output through the switching operation as required.

Thereby, even in the reproducing apparatus used by end users, the additional information added to the video signal can be extracted and used. Therefore, even if the maker manufacturing the recording medium does no use the additional information extracting apparatus, the additional information added to the illegally duplicated video signal can be extracted and used. Therefore, the additional information can be extracted quickly and illegal duplication of the information signal such as video signal can be prevented.

Here, when the additional information extracting function is provided to the reproducing apparatus used by end users, the original video signal can be supplied from an external apparatus by connecting this apparatus so that it can be prevented that the reproducing apparatus becomes large in size and cost of the reproducing apparatus is increased, by supplying the original video signal to the subtracting section 13 even if the driver of the recording medium in which the original video signal is recorded and the reading section 12 are not provided.

Moreover, when the additional information extracting apparatus shown in Fig. 5 is applied to the reproducing apparatus used by the end users, the reproduced video signal S6 formed by the reading section 11 is also output and moreover the reproduced video signal S6 and the video signal S7 to which the additional information is added from the adding section 15 are output, as required, through the switching operation.

When the additional information extracting apparatus shown in Fig. 7 is applied to the reproducing apparatus used by end users, the reproduced video signal S6 formed by the reading section 11 is also output and the reproduced video signal S9 and the additional information from the subtracting section 13 are output, as required, through the switching operation. In this case, unlike the application of the additional information extracting apparatus shown in Fig. 4 and Fig. 5 into the reproducing apparatus, the original video signal is not required and thereby application can be made more easily.

Meanwhile, the recording/reproducing apparatus having the functions of the recording apparatus and reproducing apparatus can also be formed.

When the information signal is the video signal as in the case of the embodiments explained above, it is also possible to add the additional information only to the luminance signal of the video signal or simultaneously superimpose the additional information of the same level to the three-primary-color signals of the red (R) signal, green (G) signal and blue (B) signal. In this case, it is also possible that the additional information added to the video signal does not change the hue of an image formed by the relevant video signal.

In addition, the information signal is not limited to the video signal, and the additional information such as copyright information can be added, by utilization of the present invention, to the information signal such as the voice signal, data recorded in the recording medium such as CD-ROM and the data transmitted and received to and from a computer via the Internet. Accordingly the additional information can be extracted as required and can also be displayed for utilization.

When the information signal is a stereophonic voice signal, it is possible to simultaneously add the additional information of the same level to the voice signals for the right (R) channel and left(L) channel. Inthis case, since the same additional information is added respectively to the voice signals for the right and left channels without disturbance of the right and left balance of t he voice signal, the additional information in the level of two times can be obtained by respectively extracting the additional information from the voice signals of t he right and left channels.

In above embodiment, the recording medium 100, 200, 300, 400 is defined as DVD in the explanation but it is not limited thereto and a video tape, a small size magneto-optical disc such as CD (Compact Disc), MD (Mini-Disc) and various recording medium such as magnetic recording medium, optical recording medium and magneto-optical recording medium can be used as the recording medium in which the information signal is recorded.

In the additional information extracting apparatus shown in Fig. 4 and Fig. 5, the recording medium 200 and recording medium 300 are not required to be the recording medium of the same kind. Therefore, it is naturally possible to extract the additional information by subtracting the original video signal recorded on a DVD from the video signal to which the additional information recorded in the video tape is added through the summing process.

As explained above, according to the present invention, since the additional information is added by summing the very low level additional information to the information signal, the additional information never deteriorate the information signal.

In addition, since the additional information is added through the summing to the information signal, it is difficult to erase the additional information and this additional information can be used to prevent illegal application of the information signal to realize prevention of illegal use of the information signal.

Moreover, the additional information can surely be extracted as required and can be used effectively by subtracting the original information signal to which the additional information is not added from the information signal to which the additional information is added or by executing subtraction between the information to which t he additional information is added and the information signal having a higher correlation.

## Claims

1. An information adding/extracting method characterised by comprising the steps of:
adding, through a summing process, additional information to least significant bits of an original digital information signal to produce a digital information signal to be supplied to users; and
extracting said additional information by subtracting said original digital information from said digital information signal to be supplied to users.

2. An information adding/extracting method according to claim 1, wherein said original digital information signal is a digital video signal and said additional information is added to a luminance signal of said digital video signal.

3. An information adding/extracting method according to claim 1, wherein said original digital information signal is a digital video signal and said additional information is respectively added to the three-primary-color signals of said digital video signal.

4. An information adding/extracting method according to claim 1, wherein said original digital information signal is a digital stereophonic voice information and said additional information is added to both right and left channels of said digital stereophonic voice information.

5. An information adding/extracting method to add additional information to a digital video signal and extract said added additional information, characterised by comprising the steps of:
adding by a summing process the additional information to least significant bits of said digital video signal in the sections arranged every other N sections of a correlated portion of the digital video signal to produce said digital video signal to be supplied to users, where N is an integer 1 or larger; and
extracting said additional information from said digital video signal to be supplied to users by subtracting from the information of the sections where said additional information is added the information of the adjacent sections in order to extract said additional information from said digital video signal to be supplied to users.

6. An information adding/extracting method according to claim 5, wherein said additional information is added to the luminance signal of said video signal.

7. An information adding/extracting method according to claim 5, wherein said additional information is respectively added to the three-primary-color signals of said digital video signal.

8. An information adding/extracting method according to any one of claims 5 to 8, wherein the section having correlation of said video signal is any one of the pixel, horizontal line or field.

9. An information adding/extracting method according to any one of claims 5 to 8, wherein said additional information is copyright information and said extracted copyright information is displayed.

10. An information adding/extracting method according to claim 9, wherein the extracted copyright information is displayed together with said digital video signal.

11. An information adding/extracting method according to any one of claim 5 to 10, wherein said digital video signal to be supplied to users is produced by summing the additional information which is same as said additional information but has the opposite polarity to the sections adjacent to the section where said additional information is added.

12. An information adding/extracting system characterised by comprising:
information producing means (1) for producing a digital information signal to be supplied to users by adding through a summing process additional information to least significant bits of an original digital information signal; and
information extracting means (13) for extracting said additional information by subtracting said original digital information from said digital information signal to be supplied to users.

13. An information adding/extracting system according to claim 12, wherein said original digital information signal is a digital video signal and said additional information is added to the luminance signal of said digital video signal.

14. An information adding/extracting system according to claim 12, wherein said original digital information signal is a digital video signal and said additional information is respectively added to the three-primary-color signals of said digital video signal.

15. An information adding/extracting system according to claim 12, wherein said original digital information is a digital stereophonic voice information and said additional information is added to right and left channels of said digital stereophonic voice information.

16. An information adding/extracting system to add an additional information to a digital video signal and to extract said added additional information, comprising:
information producing means (1) for producing said digital video signal to be supplied to users by adding the additional information to least significant bits of said digital video signal in the sections arranged every other N sections of a portion of the digital video signal having correlation, where N is integer 1 or larger; and
information extracting means (13) for extracting said additional information from said digital video signal to be supplied to users by subtracting from the information of the section where said additional information is added the information of the adjacent sections.

17. An information adding/extracting system according to claim 16, wherein said additional information is added to the luminance signal of said video signal.

18. An information adding/extracting system according to claim 16, wherein said additional information is added respectively to the three-primary-color signals of said digital video signal.

19. An information adding/extracting system according to any one of claims 16 to 18, wherein the portion of said video signal having correlation is any one of a pixel, a horizontal line or a field.

20. An information adding/extracting system according to any one of claims 16 to 19, wherein said additional information is a copyright information and said extracted copyright information is displayed.

21. An information adding/extracting system according to claim 20, wherein said extracted copyright information is displayed together with said digital video signal.

22. An information adding/extracting system according to any one of claims 16 to 21, wherein said digital video signal to be supplied to users is produced by further summing, to sections adjacent to the sections where said additional information is summed, the additional information which is the same as said additional information but of inverted polarity to that of said additional information.

23. An information signal processor for adding additional information to an original digital information signal, characterised by comprising:
information producing means for producing a digital information signal to be supplied to users by adding, through a summing process, additional information to least significant bits of an original digital information signal.

24. An information processor for adding, through a summing process, additional information to least significant bits of an original digital information signal to extract said additional information from the produced digital information signal to be supplied to users, comprising:
information signal extracting means for extracting said additional information by subtracting said original digital information from the digital information signal to be supplied to users.

25. An information signal processor arranged to add additional information to a digital video signal,
characterised by comprising:
information producing means for producing said digital video signal to be supplied to users by adding, through a summing process, the additional information to least significant bits of said digital video signal in sections arranged every other N sections of a section having correlation of the digital video signal, where N is an integer or 1 or larger

26. An information signal processor for extracting said additional information from a digital video signal to be supplied to users produced by adding, through a summing process, the additional information to least significant bits of said digital video signal in sections arranged every other N sections of a section having correlation of the digital video signal, where N is an integer of 1 or larger, comprising:
information extracting means for extracting said additional information from said digital video signal to be supplied to users by subtracting, from the information of the section where said additional information is added, the information of the adjacent sections.

27. An information signal recording medium recorded thereon a digital information signal to be supplied to users comprising an original digital information signal having additional information added thereon by summation to least significant bits of said original digital information signal.
